# EUROPÄISCHE PATENTSCHRIFT

(11) **EP 3 106 668 B1**
(45) Veröffentlichungstag und Bekanntmachung des Hinweises auf die Patenterteilung: **12.08.2020**
(21) Anmeldenummer: 15172543.9
(22) Anmeldetag: 17.06.2015
(51) Int. Cl.: F04D 19/04, F04D 29/058, F04D 29/059

(54) **VAKUUMPUMPE**
VACUUM PUMP
POMPE À VIDE

(43) Veröffentlichungstag der Anmeldung: 21.12.2016
(73) Patentinhaber: PFEIFFER VACUUM GMBH, 35614 Asslar (DE)
(72) Erfinder: Schill, Michael, 35614 Asslar-Bechlingen (DE); Leib, Uwe, 35781 Weilburg (DE); Koch, Bernhard, 35799 Barig-Selbenhausen (DE)
(74) Vertreter: Manitz Finsterwald Patent- und Rechtsanwaltspartnerschaft mbB

(56) Entgegenhaltungen:
- EP-A1- 0 414 127
- EP-A2- 2 333 344
- DE-A1- 10 022 062
- FR-A1- 2 893 684
- GB-A- 2 507 500
- US-A1- 2003 180 162

## Beschreibung

Die vorliegende Erfindung betrifft eine Vakuumpumpe, insbesondere Turbomolekularpumpe, mit einem in einem Stator drehbar gelagerten Rotor für zumindest eine Pumpstufe.

Vakuumpumpen werden in unterschiedlichen technischen Gebieten, beispielsweise in der Halbleiterherstellung eingesetzt, um ein für einen jeweiligen Prozess erforderliches Vakuum zu schaffen. In vielen Fällen wird zur Schaffung des erforderlichen Vakuums eine hohe Pumpleistung benötigt, so dass die zumindest eine Pumpstufe - in der Regel sind es mehrere Stufen - mit sehr hohen Drehzahlen betrieben werden muss. Dies bedeutet wiederum, dass an die Lagerung der Welle des Rotors der Pumpstufe sehr hohe Anforderungen gestellt werden.

Die DE 100 22 062 A1 offenbart eine Vakuumpumpe mit einem Rotor, welcher durch zumindest eine Lagereinheit gelagert ist. Die Lagereinheit sieht pumpeinlass- und pumpauslassseitig zumindest ein Magnetlager mit einem zugeordneten Fanglager vor. Die EP 0 414 127 A1 und die FR 2 893 684 offenbaren jeweils ein vergleichbares Konzept. Die EP 2 333 344 A2 offenbart eine Pumpe mit einem einlassseitigen elektromagnetischen Lager.

Die GB 2507500 A offenbart eine Vakuumpumpe mit den Merkmalen des Oberbegriffs des Anspruchs 1. Die US 2003/0180162 betrifft eine ähnliche Vakuumpumpe.

Zur Lagerung des Rotors ist zumindest eine Lagereinheit vorgesehen, die pumpeinlassseitig zumindest ein Permanentmagnetlager und ein dem Permanentmagnetlager zugeordnetes Fanglager sowie pumpauslassseitig zumindest ein Wälzlager umfasst. Das Fanglager bildet eine Art Anschlag, der verhindern soll, dass sich im Falle eines stärkeren Auslenkens des Rotors im Bereich des permanentmagnetisch wirkenden Radiallagers Rotor und Stator berühren. D.h. das Fanglager tritt nur dann in Aktion, wenn das Permanentmagnetlager "überfordert" ist, um Beschädigungen zu verhindern.

Der Begriff "Stator" ist in diesem Zusammenhang breit zu verstehen. Er umfasst im weitesten Sinn alle Komponenten, die sich bei Betrieb der Pumpe nicht bewegen, insbesondere das Gehäuse der Pumpe und mit dem Gehäuse fest verbundene Bauteile.

Angesichts zunehmender Forderungen nach kompakteren Turbomolekularpumpen besteht Bedarf für eine neue Konstruktion des Permanentmagnetlagers, die möglichst kompakt ist, ohne dass Abstriche bei der Zuverlässigkeit der Lagerung gemacht werden müssen. Die Lösung dieser Aufgabe erfolgt durch eine Vakuumpumpe mit den Merkmalen des Anspruchs 1.

Erfindungsgemäß ist das Fanglager - in einer axialen Richtung des Rotors gesehen - vor oder hinter dem Permanentmagnetlager angeordnet. Herkömmlicherweise ist das Fanglager radial innerhalb des Permanentmagnetlagers angeordnet. D.h. bei bekannten Lagerkonzepten umgibt das Permanentmagnetlager das Fanglager. Das bedeutet, dass der Durchmesser des Permanentmagnetlagers den des Fanglagers vorgibt. Der Durchmesser des Fanglagers ist bei kompakten Turbomolekularpumpen daher dementsprechend klein, so dass die Tragkraft des Fanglagers oder des Wellenzapfens, der dem Fanglager zugeordnet ist, unter Umständen den aufgrund des Rotorgewichts auftretenden Kräften nicht gewachsen ist.

Durch die erfindungsgemäße Konstruktion, das Fanglager in axialer Richtung vor oder hinter dem Permanentmagnetlager anzuordnen, kann ein größeres und daher leistungsfähigeres Fanglager eingesetzt werden. Außerdem vereinfacht sich die Konstruktion, da eine Bohrung in der das Permanentmagnetlager tragenden Komponente, die für die Aufnahme des Fanglagers vorgesehen ist, entfallen kann. Ferner ist kein separater Fanglagerzapfen erforderlich.

Aus den vorstehenden Betrachtungen wird deutlich, dass durch den erfindungsgemäßen Aufbau der Lagereinheit bei vereinfachter Konstruktion eine höhere Leistungsfähigkeit erreicht wird. Außerdem geht die erfindungsgemäße Lagereinheit mit Kostenvorteilen einher.

Weitere Ausführungsformen der Erfindung sind in der Beschreibung, den Ansprüchen und den beigefügten Zeichnungen angegeben.

Das Fanglager ist insbesondere ein mechanisches Lager, bevorzugt ein Wälzlager. Derartige Lager sind kostengünstig und zuverlässig. Das Fanglager ist an einem Abschnitt des Stators angeordnet und/oder steht in einem normalen Betriebszustand der Vakuumpumpe nicht in Kontakt mit dem Rotor. D.h. das Fanglager bzw. dessen Komponenten (z.B. Außenring, Innenring und Wälzkörper) ist/sind die meiste Zeit inaktiv. Nur bei einer einen vorbestimmten Wert übersteigenden Auslenkung des Rotors gerät ein Teil des Fanglagers, z.B. dessen Außenring, mit dem Rotor in Kontakt. Dadurch, dass das Fanglager sich die meiste Zeit nicht mitdreht, werden Reibungsverluste minimiert.

Gemäß einer Ausführungsform ist das Fanglager an einem Zapfen des Stators angeordnet, insbesondere an der Außenseite des Zapfens. Beispielsweise ragt der Zapfen in das Innere der Pumpe und ist mit Stegen, die sich in radialer Richtung erstrecken, mit dem Gehäuse der Pumpe fest verbunden.

Ein statorseitiger Teil des Permanentmagnetlagers und/oder des Fanglagers können verschiebbar an dem Stator angeordnet sein.

Erfindungsgemäß umfasst die Lagereinheit ein Vorspannelement, insbesondere ein Federpaket, zum axialen Vorspannen des statorseitigen Teils des Permanentmagnetlagers und des Fanglagers. Mit anderen Worten kann eine gewisse, geringfügige axiale Verschiebbarkeit der genannten Komponenten vorgesehen sein. Durch das Vorspannelement werden die genannten Komponenten mit einer vordefinierten Kraft beaufschlagt, die sie in der gewünschten Lage fixiert. Zum Justieren der axialen Position des statorseitigen Teils des Permanentmagnetlagers und des Fanglagers kann ein in axialer Richtung wirkendes Einstellelement vorgesehen sein. Beispielsweise ist das Einstellelement eine Einstellschraube oder ein Einstellring, der durch eine Schraubbewegung axial verschiebbar ist.

Das Fanglager kann - in axialer Richtung gesehen - zwischen dem Vorspannelement und dem Permanentmagnetlager angeordnet sein. Grundsätzlich ist es jedoch auch möglich, die axiale Reihenfolge der genannten Komponenten zu variieren, um den jeweils vorliegenden Anforderungen und/oder Bauraumgegebenheiten Rechnung zu tragen.

Das Permanentmagnetlager - insbesondere dessen statorseitiger Teil - und das Fanglager können über einen Zwischenring miteinander in Verbindung stehen, beispielsweise um einen Durchmesserunterschied zwischen den beiden genannten Komponenten zu überbrücken. Durch den Zwischenring wird ein indirekter Kontakt zwischen den beiden Komponenten hergestellt, beispielsweise um sie gemeinsam in einer bestimmten axialen Position festzulegen. Die Dicke des Zwischenrings kann auch so variiert bzw. gewählt werden, dass der relative Abstand zwischen dem Permanentmagnetlager und dem Fanglager den gewünschten Wert aufweist. Es versteht sich, dass ein Zwischenring - oder ggf. mehrere Zwischenringe - auch zwischen anderen Komponenten der Lagereinheit vorgesehen sein kann.

Insbesondere weist das Permanentmagnetlager einen größeren Durchmesser auf als das Fanglager. In bestimmten Fällen können jedoch auch ein umgekehrtes Durchmesserverhältnis oder gleiche Durchmesser vorgesehen sein.

Der Rotor kann eine stirnseitige Ausnehmung aufweisen, in der das Permanentmagnetlager und das Fanglager angeordnet sind. Insbesondere regt der vorstehend beschriebene Zapfen in die Ausnehmung.

Nachfolgend wird die vorliegende Erfindung rein beispielhaft anhand einer vorteilhaften Ausführungsform unter Bezugnahme auf die beigefügten Zeichnungen erläutert. Es zeigen:
- Fig. 1: einen Schnitt durch eine herkömmliche Turbomolekularpumpe und
- Fig. 2: einen Schnitt durch eine Lagereinheit einer erfindungsgemäßen Turbomolekularpumpe.

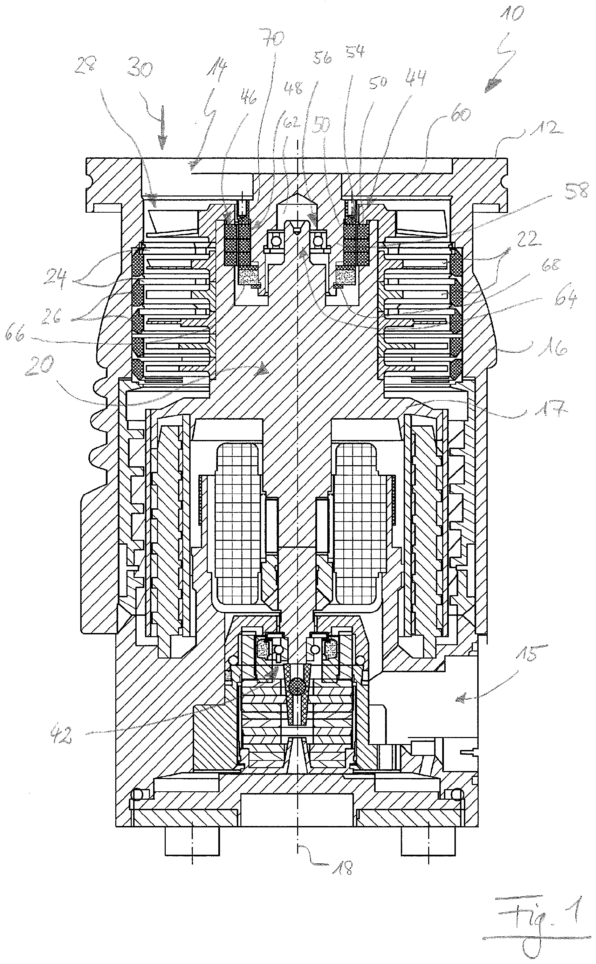

Die in Fig. 1 gezeigte herkömmliche Vakuumpumpe 10 umfasst einen von einem Einlassflansch 12 umgebenen Pumpeneinlass 14 sowie mehrere Pumpstufen zur Förderung des an dem Pumpeneinlass 14 anstehenden Gases zu einem Pumpenauslass. Mit dem Bezugszeichen 15 ist ein Bauraum für elektrische Anschlüsse bezeichnet. Die Vakuumpumpe 10 umfasst einen Stator mit einem Gehäuse 16 und einem in dem Gehäuse 16 angeordneten Rotor 17 mit einer um eine Rotationsachse 18 drehbar gelagerten Rotorwelle 20. Die Vakuumpumpe 10 ist als Turbomolekularpumpe ausgebildet und umfasst mehrere pumpwirksam miteinander in Serie geschaltete turbomolekulare Pumpstufen mit mehreren mit der Rotorwelle 20 verbundenen turbomolekularen Rotorscheiben 22 und mehreren in axialer Richtung zwischen den Rotorscheiben 22 angeordneten und in dem Gehäuse 16 festgelegten Statorscheiben 24, die durch Distanzringe 26 in einem gewünschten axialen Abstand zueinander gehalten sind. Die Rotorscheiben 22 und Statorscheiben 24 stellen in einem Schöpfbereich 28 eine in Richtung des Pfeils 30 gerichtete axiale Pumpwirkung bereit.

Die Vakuumpumpe 10 umfasst zudem drei in radialer Richtung hintereinander angeordnete und pumpwirksam miteinander in Serie geschaltete Holweck-Pumpstufen, die an dieser Stelle jedoch nicht eingehender beschrieben werden.

Die drehbare Lagerung der Rotorwelle 20 wird durch ein Wälzlager 42 im Bereich des Pumpenauslass und ein Permanentmagnetlager 44 im Bereich des Pumpeneinlasses 14 bewirkt.

Das Permanentmagnetlager 44 umfasst eine rotorseitige Lagerhälfte 46 und eine statorseitige Lagerhälfte 48, die jeweils einen Ringstapel aus mehreren in axialer Richtung aufeinander gestapelten permanentmagnetischen Ringen 50 umfassen, wobei die Magnetringe 50 unter Ausbildung eines radialen Lagerspalts 54 einander gegenüberliegen.

Innerhalb des Permanentmagnetlagers 44 ist ein Not- oder Fanglager 56 vorgesehen, das z.B. als ungeschmiertes oder als mit einem trockenen Schmiermittel geschmiertes Wälzlager ausgebildet ist und das im normalen Betrieb der Vakuumpumpe 10 den Rotor 17 nicht berührt und somit letztlich steht. Erst bei einer übermäßigen radialen Auslenkung des Rotors 17 gegenüber dem Stator - als Stator ist in diesem Zusammenhang die Gesamtheit der mit dem Gehäuse 16 verbundenen, bei Betrieb der Vakuumpumpe 10 statischen Komponenten zu verstehen - gelangt dieser mit dem Fanglager 56 in Kontakt. Das Fanglager 56 bildet somit einen radialen Anschlag für den Rotor 17, der eine Kollision der rotorseitigen Strukturen mit den statorseitigen Strukturen der Pumpe 10 verhindert.

Ersichtlich ist das Fanglager 56 radial innerhalb dem Permanentmagnetlager 44 angeordnet. Zu diesem Zweck weist ein zentraler Zapfen 58, der über Stege 60 (in Fig. 1 ist nur ein Steg 60 zu sehen) mit dem Einlassflansch 12 verbunden ist, eine Bohrung 62 auf, die das Fanglager 56 aufnimmt. Das Fanglager 56 ist in der Bohrung 62 fixiert. Ein Lagerzapfen 64, der eine axiale Verlängerung der Rotorwelle 20 bildet, ragt in das Fanglager 56 hinein, berührt dieses aber nur, wenn der Rotor 17 so weit radial ausgelenkt wird, dass ein Kontakt der Lagerhälften 46, 48 des Permanentmagnetlagers 44 oder anderer rotierender Komponenten mit statischen Komponenten der Pumpe 10 zu befürchten steht. Das Fanglager 56 bildet somit einen Sicherheitsanschlag, der die Pumpe 10 vor Beschädigungen schützt.

In gleicher Höhe wie das Fanglager 56 ist das Permanentmagnetlager 44 an dem Zapfen 58 angeordnet, allerdings an dessen Außenseite. Die Lagerhälfte 48 des Permanentmagnetlagers 44 ist verschiebbar an dem Zapfen 58 angeordnet. Um die axiale Position der statorseitigen Lagerhälfte 48 einstellen zu können, ist ein Federpaket 66 vorgesehen, das sich an einem Sprengring 68 in axialer Richtung abstützt. Das Federpaket 66 wirkt auf die Lagerhälfte 48 und drückt diese gegen einen Einstellring 70. Um die axiale Position der statorseitigen Lagerhälfte 48 einzustellen, wird der Einstellring 70 gedreht, wodurch sich dessen, einen Anschlag für die Lagerhälfte 48 bildende Unterseite in axialer Richtung verschiebt.

Zwar ist die vorstehend beschriebene Ausgestaltung der das Permanentmagnetlager 44 und das Fanglager 56 umfassenden Lagereinheit in axialer Richtung recht kompakt, allerdings ergeben sich bei zunehmender Miniaturisierung Probleme bei der Ausgestaltung des Fanglagers 56. Je kleiner nämlich die Pumpe 10 baut, desto kleiner müssen bei dieser Bauweise auch das Fanglager 56 und der ihm zugeordnete Lagerzapfen 64 ausgestaltet werden. Dies kann Stabilitätsprobleme bereiten, da bei Betrieb der Vakuumpumpe 10 aufgrund der sehr hohen Umdrehungsgeschwindigkeiten des Rotors 17 erhebliche Kräfte auftreten.

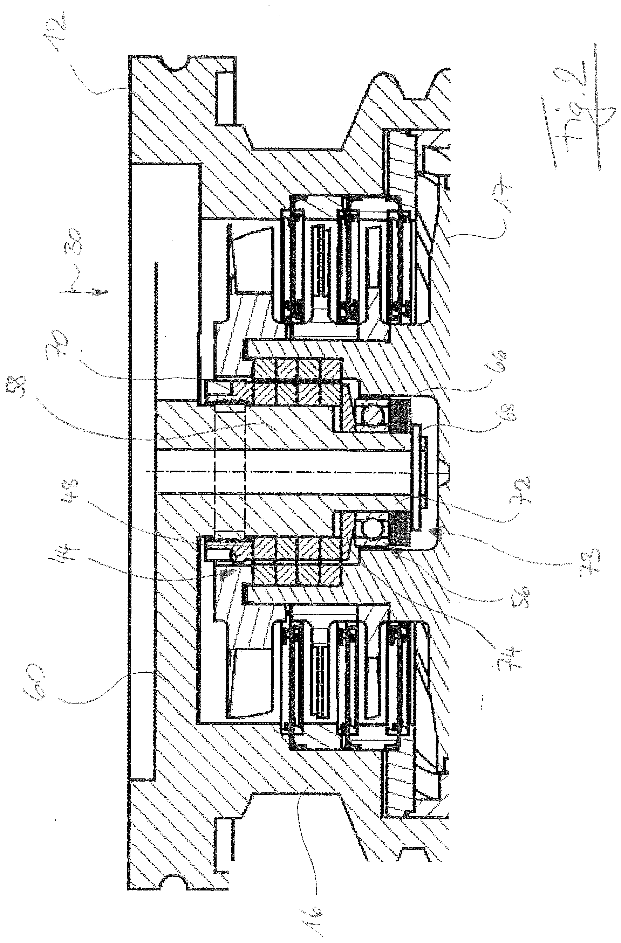

Fig. 2 zeigt die erfindungsgemäße Lösung der pumpeneinlasseitigen Lagerung des Rotors 17. Das Fanglager 56 ist in Pumprichtung 30 gesehen hinter dem Permanentmagnetlager 44 angeordnet. D.h. das Fanglager 56 muss nicht im Inneren des Zapfens 58 angeordnet werden, sondern es ist an der Außenseite eines Zapfenabschnitts 72 angeordnet, der in axialer Richtung aus dem Permanentmagnetlager 44 herausragt.

Der Zapfen 58 und der an ihm angeformte Zapfenabschnitt 72 ragen in eine stirnseitige Ausnehmung 73 des Rotors 17. Die erfindungsgemäße Bauweise der Lagereinheit macht den Lagerzapfen 64 der Pumpe 10 gemäß Fig. 1 überflüssig, was eine nicht unwesentlichen konstruktive Vereinfachung darstellt, die die Herstellungskosten der Pumpe 10 gemäß Fig. 2 senkt.

Wie die statorseitige Lagerhälfte 48 ist auch das Fanglager 56 verschiebbar an dem Zapfen 58 bzw. dem Zapfenabschnitt 72 angeordnet. Das sich an dem Sprengring 68 abstützende Federpaket 66 drückt das Fanglager 56 über einen Zwischenring 74 gegen die statorseitige Lagerhälfte 48, die sich wiederum an dem Einstellring 70 abstützt. Der Zwischenring 74 bildet somit eine Art Überbrückung, die den Durchmesserunterschied zwischen dem Fanglager 56 und der Lagerhälfte 48 kompensiert.

Die vorstehend beschriebene Bauweise ermöglicht eine wesentlich einfachere Ausgestaltung des Zapfens 58 bzw. der Ausnehmung 73, da nicht nur der Lagerzapfen 64 sondern auch die Bohrung 62 entfällt, die bei der Vakuumpumpe 10 gemäß Fig. 1 zwingend erforderlich ist. Die erfindungsgemäße Bauweise ist zudem stabiler, da ein Fanglager 56 mit einem größeren Durchmesser verwendet werden kann, als dies bei der Vakuumpumpe 10 gemäß Fig. 1 der Fall ist.

Die axiale Reihenfolge der Lagerhälfte 48, des Zwischenrings 74, des Fanglagers 56 und des Federpakets 66, das auch durch ein beliebiges anderes elastisches Element ersetzt werden kann, kann an die jeweils vorliegenden Umstände angepasst werden. Mit anderen Worten kann das Federpaket 66 zum Beispiel auch oberhalb der statorseitigen Lagerhälfte 48 vorgesehen sein und/oder es können mehrere Zwischenringe 74 zum Einsatz gelangen, wenn mehrere Durchmesserunterschiede zwischen den Komponenten 48,56 und/oder 66 vorliegen. Es kann auch vorgesehen sein, dass das Fanglager 56 den gleichen oder einen größeren Durchmesser aufweist als die Lagerhälfte 48. Insbesondere ist ein größerer Durchmesser des Fanglagers 56 sinnvoll, wenn dieses in Pumpwirkungsrichtung 30 vor der statorseitigen Lagerhälfte 48 angeordnet ist.

Die im Wesentlichen axiale Anordnung der relevanten Komponenten der pumpeneinlassseitigen Lagereinheit ermöglicht es, diese als eine Art Modul auszugestalten, das nicht nur einfacher und kostengünstiger herstellbar ist, sondern die Lagereinheit lässt sich beispielsweise auch leichter kapseln, etwa um sie vor aggressiven Prozessgasen zu schützen.

### Bezugszeichenliste

- 10: Vakuumpumpe
- 12: Einlassflansch
- 14: Pumpeneinlass
- 15: Bauraum
- 16: Gehäuse
- 17: Rotor
- 18: Rotationsachse
- 20: Rotorwelle
- 22: Rotorscheibe
- 24: Statorscheibe
- 26: Distanzring
- 28: Schöpfbereich
- 30: Pumpwirkung
- 42: Wälzlager
- 44: Permanentmagnetlager
- 46: rotorseitige Lagerhälfte
- 48: statorseitige Lagerhälfte
- 50: permanentmagnetischer Ring
- 54: Lagerspalt
- 56: Fanglager
- 58: Zapfen
- 60: Steg
- 62: Bohrung
- 64: Lagerzapfen
- 66: Federpaket
- 68: Sprengring
- 70: Einstellring
- 72: Zapfenabschnitt
- 73: Ausnehmung
- 74: Zwischenring

## Patentansprüche

1. Vakuumpumpe, insbesondere Turbomolekularpumpe, mit einem in einem Stator drehbar gelagerten Rotor (17) für zumindest eine Pumpstufe, wobei zur Lagerung des Rotors (17) zumindest eine Lagereinheit vorgesehen ist, die zumindest ein Permanentmagnetlager (44) im Bereich eines Pumpeneinlasses (14) und ein dem Permanentmagnetlager (44) zugeordnetes Fanglager (56) sowie ein Wälzlager (42) im Bereich eines Pumpenauslasses umfasst, wobei das Fanglager (56) in einer axialen Richtung des Rotors (17) gesehen vor oder hinter dem Permanentmagnetlager (44) angeordnet ist, wobei das Fanglager (56) an einem Abschnitt (58, 72) des Stators angeordnet ist und in einem normalen Betriebszustand der Vakuumpumpe nicht in Kontakt mit dem Rotor (17) steht, **dadurch gekennzeichnet, dass**
die Lagereinheit ein Vorspannelement (66), insbesondere ein Federpaket, zum axialen Vorspannen eines statorseitigen Teils (48) des Permanentmagnetlagers (44) und des Fanglagers (56) an einem Abschnitt (58, 72) des Stators umfasst.

2. Vakuumpumpe nach Anspruch 1,
dadurch g**ekennzeichnet**, dass
das Fanglager (56) ein mechanisches Lager, insbesondere ein Wälzlager ist.

3. Vakuumpumpe nach Anspruch 1,
**dadurch gekennzeichnet, dass**
das Fanglager (56) an einem Zapfen (58, 72) des Stators (16) angeordnet ist, insbesondere an der Außenseite des Zapfens (58, 72).

4. Vakuumpumpe nach zumindest einem der Ansprüche 1, 2 oder 3,
**dadurch gekennzeichnet, dass**
ein statorseitiger Teil (48) des Permanentmagnetlagers (44) und/oder das Fanglager (56) verschiebbar an dem Stator angeordnet sind.

5. Vakuumpumpe nach zumindest einem der Ansprüche 1 bis 4,
**dadurch gekennzeichnet, dass**
die Lagereinheit ein in axialer Richtung wirkendes Einstellelement (70) zum Justieren der axialen Position eines statorseitigen Teils (48) des Permanentmagnetlagers (44) und des Fanglagers (56) umfasst.

6. Vakuumpumpe nach zumindest einem der vorstehenden Ansprüche,
**dadurch gekennzeichnet, dass**
das Fanglager (56) - in axialer Richtung gesehen - zwischen dem Vorspannelement (66) und dem Permanentmagnetlager (44) angeordnet ist.

7. Vakuumpumpe nach zumindest einem der vorstehenden Ansprüche,
**dadurch gekennzeichnet, dass**
das Permanentmagnetlager (44) und das Fanglager (56) über einen Zwischenring (74) miteinander in Verbindung stehen.

8. Vakuumpumpe nach zumindest einem der vorstehenden Ansprüche,
**dadurch gekennzeichnet, dass**
der Rotor (17) eine stirnseitige Ausnehmung aufweist, in der das Permanentmagnetlager (44) und das Fanglager (56) angeordnet sind.

9. Vakuumpumpe nach zumindest einem der vorstehenden Ansprüche,
**dadurch gekennzeichnet, dass** das Permanentmagnetlager (44) einen größeren Durchmesser aufweist als das Fanglager (56).

## Claims

1. A vacuum pump, in particular a turbomolecular pump, comprising a rotor (17), which is rotatably supported in a stator, for at least one pumping stage, wherein at least one bearing unit is provided for supporting the rotor (17) and comprises at least one permanent magnet bearing (44) in the region of a pump inlet (14); a safety bearing (56) associated with the permanent magnet bearing (44); and a rolling element bearing (42) in the region of a pump outlet, wherein the safety bearing (56) is arranged in front of or behind the permanent magnet bearing (44), viewed in an axial direction of the rotor (17), and wherein the safety bearing (56) is arranged at a section (58, 72) of the stator and is not in contact with the rotor (17) in a normal operating state of the vacuum pump,
**characterized in that**
the bearing unit comprises a preload element (66), in particular a spring package, for axially preloading a stator-side part (48) of the permanent magnet bearing (44) and of the safety bearing (56) at a section (58, 72) of the stator.

2. A vacuum pump in accordance with claim 1,
**characterized in that**
the safety bearing (56) is a mechanical bearing, in particular a rolling element bearing.

3. A vacuum pump in accordance with claim 1,
**characterized in that**
the safety bearing (56) is arranged at a pin (58, 72) of the stator (16), in particular at the outer side of the pin (58, 72).

4. A vacuum pump accordance with at least one of the claims 1, 2 or 3,
**characterized in that**
a stator-side part (48) of the permanent magnet bearing (44) and/or the safety bearing (56) is/are displaceably arranged at the stator.

5. A vacuum pump in accordance with at least one of the claims 1 to 4,
**characterized in that**
the bearing unit comprises a setting element (70) acting in an axial direction for adjusting the axial position of a stator-side part (48) of the permanent magnet bearing (44) and of the safety bearing (56).

6. A vacuum pump in accordance with at least one of the preceding claims,
**characterized in that**
the safety bearing (56) is arranged - viewed in the axial direction - between the preload element (66) and the permanent magnet bearing (44).

7. A vacuum pump in accordance with at least one of the preceding claims,
**characterized in that**
the permanent magnet bearing (44) and the safety bearing (56) are connected to one another via an intermediate ring (74).

8. A vacuum pump in accordance with at least one of the preceding claims,
**characterized in that**
the rotor (17) has an end-face recess in which the permanent magnet bearing (44) and the safety bearing (56) are arranged.

9. A vacuum pump in accordance with at least one of the preceding claims,
**characterized in that**
the permanent magnet bearing (44) has a larger diameter than the safety bearing (56).

## Revendications

1. Pompe à vide, en particulier pompe turbomoléculaire, comportant un rotor (17) monté de façon mobile en rotation dans un stator pour au moins un étage de pompage,
dans laquelle
pour monter le rotor (17), il est prévu au moins un ensemble formant palier qui comprend au moins un palier à aimant permanent (44) dans la zone d'une entrée de pompe (14) et un palier de sécurité (56) associé au palier à aimant permanent (44) ainsi qu'un palier de roulement (42) dans la zone d'une sortie de pompe, le palier de sécurité (56) étant disposé en avant ou en arrière du palier à aimant permanent (44), vu en direction axiale du rotor (17), le palier de sécurité (56) étant disposé sur une portion (58, 72) du stator et n'étant pas en contact avec le rotor (17) dans un état de fonctionnement normal de la pompe à vide,
**caractérisée en ce que**
l'ensemble formant palier comprend un élément de précontrainte (66), en particulier un empilement de ressorts, destiné à précontraindre axialement une partie côté stator (48) du palier à aimant permanent (44) et du palier de sécurité (56) sur une portion (58, 72) du stator.

2. Pompe à vide selon la revendication 1,
**caractérisée en ce que**
le palier de sécurité (56) est un palier mécanique, en particulier un palier de roulement.

3. Pompe à vide selon la revendication 1,
**caractérisée en ce que**
le palier de sécurité (56) est disposé sur un tourillon (58, 72) du stator (16), en particulier sur le côté extérieur du tourillon (58, 72).

4. Pompe à vide selon l'une au moins des revendications 1, 2 ou 3,
**caractérisée en ce que**
une partie (48) côté stator du palier à aimant permanent (44) et/ou le palier de sécurité (56) est/sont disposé(e)(s) de façon mobile en translation sur le stator.

5. Pompe à vide selon l'une au moins des revendications 1 à 4,
**caractérisée en ce que**
l'ensemble formant palier comprend un élément de réglage (70) agissant dans la direction axiale pour ajuster la position axiale d'une partie (48) côté stator du palier à aimant permanent (44) et du palier de sécurité (56).

6. Pompe à vide selon l'une au moins des revendications précédentes,
**caractérisée en ce que**
le palier de sécurité (56) - vu dans la direction axiale - est disposé entre l'élément de précontrainte (66) et le palier à aimant permanent (44).

7. Pompe à vide selon l'une au moins des revendications précédentes,
**caractérisée en ce que**
le palier à aimant permanent (44) et le palier de sécurité (56) sont reliés entre eux par une bague intermédiaire (74).

8. Pompe à vide selon l'une au moins des revendications précédentes,
**caractérisée en ce que**
le rotor (17) présente un évidement côté frontal dans lequel sont disposés le palier à aimant permanent (44) et le palier de sécurité (56).

9. Pompe à vide selon l'une au moins des revendications précédentes,
**caractérisée en ce que**
le palier à aimant permanent (44) présente un diamètre plus grand que le palier de sécurité (56).
